# EUROPEAN PATENT SPECIFICATION

(11) **EP 2 663 477 B1**
(45) Date of publication and mention of the grant of the patent: **24.09.2014**
(21) Application number: 12703154.0
(22) Date of filing: 05.01.2012
(51) Int. Cl.: B60T 11/224, B60T 15/38

(54) **DIFFERENTIAL MASTER CYLINDER, BRAKING SYSTEM COMPRISING THE CYLINDER AND METHOD OF DRIVING A USER DEVICE BY MEANS OF THE CYLINDER**
DIFFERENTIAL-HAUPTZYLINDER, BREMSANLAGE MIT DEM ZYLINDER UND VERFAHREN ZUR ANSTEUERUNG EINER BENUTZERVORRICHTUNG MITTELS DES ZYLINDERS
MAÎTRE-CYLINDRE DIFFÉRENTIEL, SYSTÈME DE FREINAGE COMPRENANT CE MAÎTRE-CYLINDRE ET PROCÉDÉ D'ENTRAÎNEMENT D'UN DISPOSITIF UTILISATEUR AU MOYEN DE CE MAÎTRE-CYLINDRE

(30) Priority: 12.01.2011 IT TO20110006
(43) Date of publication of application: 20.11.2013
(73) Proprietor: VHIT S.p.A., 26010 Offanengo (CR) (IT)
(72) Inventor: CADEDDU, Leonardo, I-26010 Offanengo (cr) (IT); ALBERTI, Luigi, I-26010 Offanengo (cr) (IT)
(74) Representative: Robba, Pierpaolo
(86) International application number: PCT/IB2012/050061
(87) International publication number: WO 2012/095767

(56) References cited:
- US-A- 2 463 062
- US-A- 3 667 229
- US-B1- 6 378 958

## Description

### Technical field

The present invention relates to hydraulic pressure generating devices of the kind commonly known as master cylinders, and more particularly it relates to a differential master cylinder.

Preferably, but not exclusively, the invention is applied in hydraulic braking systems of motor vehicles, and the following description will generally refer to such a preferred application.

### Prior Art

Document US2,463,062-A discloses a differential master cylinder, including: - an inlet (54) for a fluid to be pressurised and an outlet for delivering pressurised fluid to a user device operating according to at least an initial operating phase and a final operating phase; - compression members (P1, 58) having at least a first and a second compressing surface, said first compressing surface having a greater area than the second compressing surface, said compression members being arranged to define at least one chamber (hollow chamber in the center) connected to the user device and to bring the fluid to a low pressure in the initial phase by means of the first surface and to a high pressure in the second phase by means of the second surface, and - at least one control valve (78) arranged to cause a gradual transition between the two phases; wherein the compression members comprise a hollow primary piston (P1) and a hollow secondary piston (58), which are open at least at one end and are mutually associated in telescopic manner so that the primary piston (P1) slides on the secondary piston (58), which is stationary, and so that their cavities form an internal chamber forming the at least one chamber connected to the user device, the sliding of the primary piston (P1) determining the transition from the compression by means of the first surface to the compression by means of the second surface by actuating the control valve.

Differential master cylinders are pressure generating devices comprising a piston with two portions with different diameters, or a pair of pistons with different diameters, and a hydraulic valve arranged to act so that:
- the piston portion or the piston with larger diameter is initially operating, in order to supply, for a given stroke of the piston, a large amount of fluid at low pressure;
- subsequently, upon the attainment of a given pressure threshold (cutting pressure or cutting point), the piston portion or the piston with smaller diameter gradually starts operating, in order to supply, for a given stroke of the piston, a limited amount of fluid at high pressure.

This behaviour is very useful in hydraulic control of the brakes of motor vehicles. Actually, in the brakes, a play between the stationary parts and the moving parts (for instance, the pads and the discs of a disc brake) is necessary in order to avoid contact while the vehicle is moving, resulting in absorbed passive powers, overheating and wear. In order to take up such a play at the beginning of the braking, a quite high volume of low pressure fluid is necessary. Subsequently, when the stationary and the moving parts of the brake are definitively in contact, the volume of absorbed fluid decreases, but a pressure is required that is the higher the stronger is the braking.

A first peculiar feature of differential master cylinders is the gradual pressure reduction in the differential chamber, from the cutting pressure down to atmospheric pressure, in order to gradually change, in pleasant way, the force-to-pressure ratio. A second peculiar feature is that, at the end of the differential transition, the whole of the force applied acts on the smaller piston area. In practice, a differential master cylinder acts as it would consist of a pair of master cylinders with different diameters operating sequentially, without losses of mechanical/hydraulic performance.

Differential master cylinders allow limiting the overall stroke necessary for operating the brakes and allow keeping the force applied to the brake pedal within acceptable limits, and they are often used in situations where a brake booster cannot be used for limiting the effort at the pedals.

US 3,667,229 discloses an example of differential master cylinder with a piston comprising two parts with different diameters defining, with corresponding sections of the cylinder bore, a high-pressure chamber and a low-pressure chamber, which are in communication during the initial phase mentioned above and are isolated from each other after the attainment of the cutting pressure. The control valve is coaxially arranged between the two parts of the piston.

This known solution has some drawbacks:
- machining and assembling difficulties, due to the configuration of the two-diameter cylinder bore and to the configuration of the piston, and consequent high manufacturing cost if compared to the market value;
- difficulty of mounting the cylinder on the vehicle, due to the greater axial size with respect to a conventional master cylinder: this latter aspect is of particular importance above all for agricultural tractors, earth moving machines and the like, where the room available for the braking control devices in the engine compartment is more and more limited.

US 6,378,958 discloses a distributing valve for a servo-assisted braking system, in order to distribute fluid coming from different hydrodynamic sources and supply the brakes of a vehicle with low pressure fluid in a first phase of the braking and with high pressure fluid in a second phase of the braking. The valve has a pair of telescopically mounted sliding pistons, and includes a hydrostatic control driven by a simple master cylinder o a double-circuit master cylinder. This valve creates size problems, since it is necessary to provide supplemental room for the valve, which is external to the master cylinder, and the relevant connections to the cylinder and to the hydrodynamic sources of the servo-assistance fluid. Moreover, it makes the brake control system complex and expensive.

### Description of the invention

It is an object of the invention to provide a differential master cylinder solving the problems of the prior art.

According to the invention, the compression members for the fluid comprise a hollow primary piston and a hollow secondary piston, which are open at least at one end and are mutually associated in telescopic manner so that the primary piston slides on the secondary piston, which is stationary, and so that their internal cavities form a single chamber connected to a user device. The primary piston is arranged to determine, by its sliding, the transition from the compression by means of the larger compressing surface to the compression by means of the smaller compressing surface, by actuating the control valve.

Advantageously, the pistons further define at least one external annular chamber which is arranged to cooperate with the internal chamber until the attainment of the cutting pressure, and is subsequently isolated from the internal chamber, in order to gradually return to atmospheric pressure.

Further advantageously, the control valve is located externally of the pistons and is housed in a seat whose axis is parallel to the piston axis.

Thanks to such features, the cylinder has a limited axial size and it does not need a bore with different diameters.

The invention also concerns a braking system including the cylinder, and a method of driving a user device with pressurised fluid by means of the cylinder

### Brief description of the drawings

Other advantages and features of the invention will become apparent from the following description of preferred embodiments, with reference to the accompanying drawings, in which:
- Fig. 1 is an axial cross-section of a first embodiment of the invention;
- Fig. 2 is an enlarged view of the control valve;
- Fig. 3 is an axial cross-section of a second embodiment of the invention, suitable for use in a vehicle with two braking pedals and equipped with a first kind of system for balancing braking of the wheels on opposite vehicle sides;
- Fig. 4 is an axial cross-section of a variant of the second embodiment of the invention, equipped with a second kind of system for balancing braking; and
- Fig. 5 shows a variant embodiment of the control valve.

### Detailed description of preferred embodiments

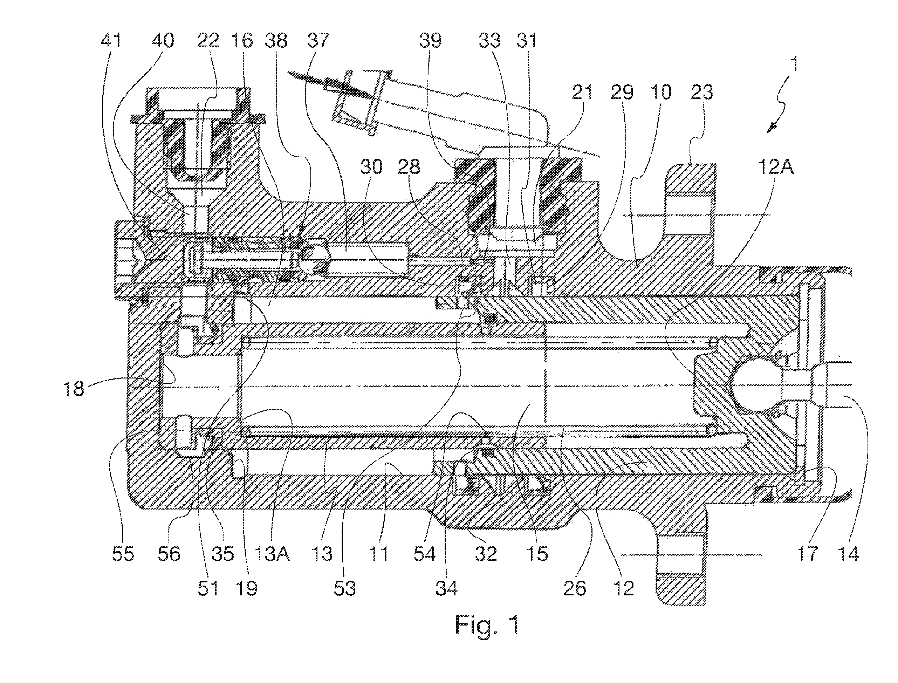

Referring to Fig. 1, a master cylinder 1 according to the invention includes a substantially cylindrical body 10, which is hollow and open at one end, is made for instance of cast iron, light alloy or thermoplastic or thermosetting polymer, and has a longitudinal bore 11 where a pair of hollow pistons 12 and 13 are housed. Piston 12 (primary piston) is controlled by the brake pedal through an actuating rod 14 and is telescopically slidable on piston 13 (secondary piston), which is stationary. By convention, hereinafter the portion of the cylinder or its components located on the same side as rod 14 will be referred to as "front portion", and the opposite portion will be referred to as "rear portion".

Piston 12 is substantially barrel-shaped and piston 13 preferably has a through cavity. The pistons are mounted so that their internal cavities form a single cylindrical chamber 15, inside which there is mounted an element 26 opposing the sliding of piston 12, in particular a coil spring arranged between an internal projection 12A of the closed end of piston 12 and an internal shoulder 13A of piston 13. The latter piston in turn defines an annular chamber 16 with the front surface of the open end of primary piston 12, the side wall of bore 11 and an internal step 19 of this bore. As it will be explained later on, chamber 15 is the chamber where the brake control pressure is generated, whereas the gradual pressure reduction mentioned above takes place within chamber 16.

Advantageously, the external diameter of piston 12 is slightly greater at the piston ends than in the axially intermediate section, and the sections with greater diameter act as guides for the sliding of piston 12, whereas a gap (that cannot appreciated in the drawing) will exist between said intermediate section of piston 12 and the side wall of bore 11.

The telescopic arrangement mentioned above allows using a low rigidity, relatively long spring, determining a reduced load variation, for bringing back the system to the starting conditions when the force applied to rod 14 ceases.

At its closed end, piston 12 abuts against a stop ring 17, e.g. a Seeger ring, located in a suitable groove formed in the wall of bore 11 at the mouth thereof. On the opposite side with respect to piston 12, piston 13 abuts against end 18 of bore 11 and is kept in abutment against said end 18 by spring 26. Rod 14 is connected in conventional manner to the closed end of piston 12.

Still in conventional manner, the body has formed therein an inlet 21 for the fluid, typically oil, coming from a reservoir, at least one outlet 22 for supplying user devices, in the preferred application hydraulic driving members of the brakes, with the fluid under pressure, and a flange 23 for fastening the body to the pedal support. The reservoir, the user devices, the ducts for their connection to the cylinders and the support are not shown for the sake of simplicity.

A pair of lip gaskets 28, 29, housed in respective grooves 30, 31, advantageously with rectangular cross section, is arranged in the wall of bore 11, in an axially intermediate section facing the intermediate section of piston 12. A third groove 32, e.g. trapezoidal, which communicates with inlet 21 through a radial passage 33 and serves for collecting the fluid coming from the reservoir, is formed between grooves 30, 31. Gasket 28 is intended to shut, when piston 12 is operated, passages 53 formed in piston 12 near the open end and putting groove 32 in communication with chamber 16. Gasket 29 ensures fluid seal between piston 12 and the wall of bore 11 towards the atmosphere. Gaskets 28, 29 are static with respect to their seats (hence with respect to the internal surface of bore 11), and dynamic with respect to the external surface of piston 12. This allows a reduced wear of the gaskets, since they act by means of a surface that is not subjected to wear due to the piston sliding.

An annular gasket 34, located in a seat formed in the internal surface of primary piston 12 in a position rearward of passages 53, is intended to shut, when piston 12 is operated, a passage 54 formed in the wall of piston 13 near the open end thereof and putting chambers 16 and 15 in communication with each other.

The end portion of chamber 15, beyond shoulder 13A, has radial passages 55 ending into a circular groove 56 formed between the end portions of piston 13 and bore 11 and communicating with outlet 22 through a radial passage 40. Groove 56 can also communicate with chamber 16 thanks to the radial clearance between the end portions of piston 13 and bore 11. Along the passage formed by this clearance, a seat is provided for a further lip gasket 35 cooperating with the wall of bore 11 and forming a unidirectional valve arranged to allow communication between chamber 16 and groove 56 (and hence chamber 15) during an initial phase of the braking, as it will be explained below.

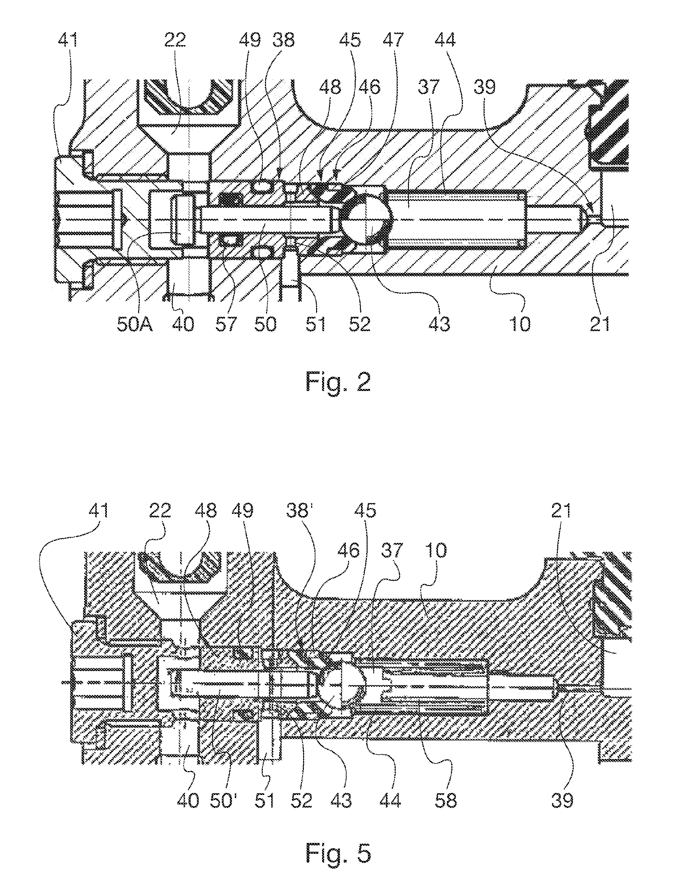

A multiple-diameter cavity 37, having axis parallel with the axis of bore 11 and housing valve 38 controlling the differential transition, is also formed in the rear portion of body 10, between bore 11 and outlet 22. Cavity 37 is closed at one end by a plug 41 equipped with a gasket, and it communicates at the other end with inlet 21 through a hole 39. As it can be better seen in Fig. 2, valve 38, normally closed, comprises a ball shutter 43, which is opposed by a spring 44 the preload of which determines the opening pressure for the valve. In rest conditions, shutter 43 abuts against an elastic wedge 45, preferably made of rubber, providing fluid tightness between the portions of cavity 37 upstream and downstream the shutter. A ring 46, abutting against a step 47, prevents wedge 45 from sliding when shutter 43 is displaced upon the opening of the valve. On the opposite side with respect to shutter 43, wedge 45 abuts against a bushing 48 of which the axial position is set by plug 41. The initial opening of the valve is determined by the pressure in chamber 16, which pressure is applied to shutter 43 through holes 51, 52, formed in the wall of bore 11 and in bushing 48, respectively, and through the radial clearance between bushing 48 and a stem 50, axially slidable in the bushing and arranged to displace shutter 43 after the initial opening. Stem 50 has a widened head 50A and is responsive to the pressure of the fluid in chamber 15. To this end, cavity 37, in the region where head 50A is located, crosses passage 40, for instance thanks to radial holes in plug 41. A gasket 57 provides fluid tightness between stem 50 and bushing 48, and a gasket 49 provides fluid tightness between the bushing and the wall of cavity 37.

Valve 38 is known per se from US 3,667,229, where however is arranged in series between the pistons. The arrangement parallel to bore 11 is one of the features of the invention contributing to limiting the axial size. Moreover valve 38, being accessible from the outside, allows obtaining products with different calibrations from a same differential master cylinder structure.

The operation of the invention will be now described.

In rest conditions, shown in Fig. 1, there is a hydraulic connection between inlet 21 and outlet 22 (hence between the fluid reservoir and the brake driving members) through passage 33, groove 32, the gap between the internal wall of bore 11 and piston 12, passages 53, 54, chamber 15, passage 55, groove 56 and passage 40. Such a connection serves to compensate possible volume variations due to temperature variations and to leakages.

When a force sufficient to overcome the preload of spring 26 is applied to rod 14 by acting on the brake pedal, piston 12 moves leftwards, thereby closing radial passages 53 by means of gasket 28 and blocking communication with the reservoir. Immediately thereafter, gasket 34 closes passage 54, thereby blocking communication with chamber 15. In such conditions, hydraulic fluid is present in both chambers 15, 16. Chamber 16 is closed towards both the reservoir and the brake driving members (by gaskets 34 and 35, respectively) and chamber 15 communicates with outlet 22 through passage 55. A further increase in the applied force, and hence in the displacement of piston 12, will cause fluid displacement towards outlet 22 through passage 55, groove 56 and passage 40.

The conventional hydraulic fluids can be considered as incompressible, and hence a reduction, even small, in the volume of the chambers where they are contained causes a significant pressure increase, proportional to the absorption by the user devices (i.e. the brake driving members). In this phase, chamber 16 is not in communication with said devices and hence no absorption occurs, so that the volume reduction caused by the displacement of piston 12 will cause a rapid increase of the pressure in that chamber with respect to chamber 15, which on the contrary is directly connected to the brake driving members. The pressure increase in chamber 16 will then overcome the resistance of gasket 35, thereby allowing the fluid to flow towards outlet 40, where the fluid volumes contained in both chambers are added together. In this phase, the diameter of primary piston 12 can therefore be considered as the effective cylinder diameter. Until this moment, valve 38 is not affected by the fluid flow towards the outlet.

At this point, by continuing to act upon the brake pedal and hence on rod 14, the pressure in chamber 16 increases with the same law as in chamber 15 and, when the resistance opposed by spring 44 is overcome (cutting point), it makes valve 38 open. The opening of valve 38 makes the pressure in chamber 16 to be discharged towards inlet 21, and hence towards the reservoir, through hole 39. From this moment on, chambers 16 and 15 are again separated. Discharging the pressure in chamber 16 through valve 38 makes the pressure in chamber 15 prevail on that in chamber 16. The pressure in chamber 15 applies a force, increasing proportionally to such a pressure, on stem 50, which displaces shutter 43, thereby moving it further away from wedge 45 against the load of spring 44 and causing a gradual decrease of the pressure in chamber 16. When head 50A of stem 50 reaches bushing 48, valve 38 is completely open and chamber 16 is at atmospheric pressure. During such a transient, also the ratio between the force applied onto rod 14 and the output pressure of the cylinder is modified proportionally to the decrease of the pressure in chamber 16, and the output pressure gradually attains the value determined by the application of the force onto the area of piston 13, without losses of performance apart from those due to frictions and to the opposing spring, which losses, on the other hand, are equivalent to those occurring in conventional master cylinders.

After such a transient, the final phase begins.

In synthesis, according to the invention, the sliding of primary piston 12 on stationary secondary piston 13 implements the different steps of the cylinder actuation (and hence of the brake operation) and leads to the variation of the stroke-to-volume ratio with respect to the force-to-pressure ratio.

It is also to be appreciated that, in case of a rapid actuation of the brake pedal, the cutting point is advantageously raised thanks to the throttle caused by calibrated hole 39 that, by slowing down the fluid flow towards the reservoir, causes an increase in the pressure downstream shutter 43, and such an increase in turn raises the pressure necessary for the opening and hence the cutting point. This behaviour compensates the need to have a greater approaching pressure for the moving parts of the brake driving members, due to the inertia, because of the increased actuation speed.

The described arrangement assumes that all brakes are operated by a single master cylinder. As known, in certain vehicles such as agricultural tractors, earth moving machines and the like, the brakes on opposite vehicle sides (in particular, the rear brakes) can be operated separately or jointly by two separate brake pedals through respective master cylinders. As known, in such cases, a balancing system is required in order to ensure a braking substantially of the same intensity on both sides when both pedals are simultaneously operated. The balancing is obtained by transferring fluid under pressure between the two master cylinders through a balancing duct and a pair of balancing valves, one for each cylinder, which are normally closed and open when the stroke of the respective piston exceeds a given value.

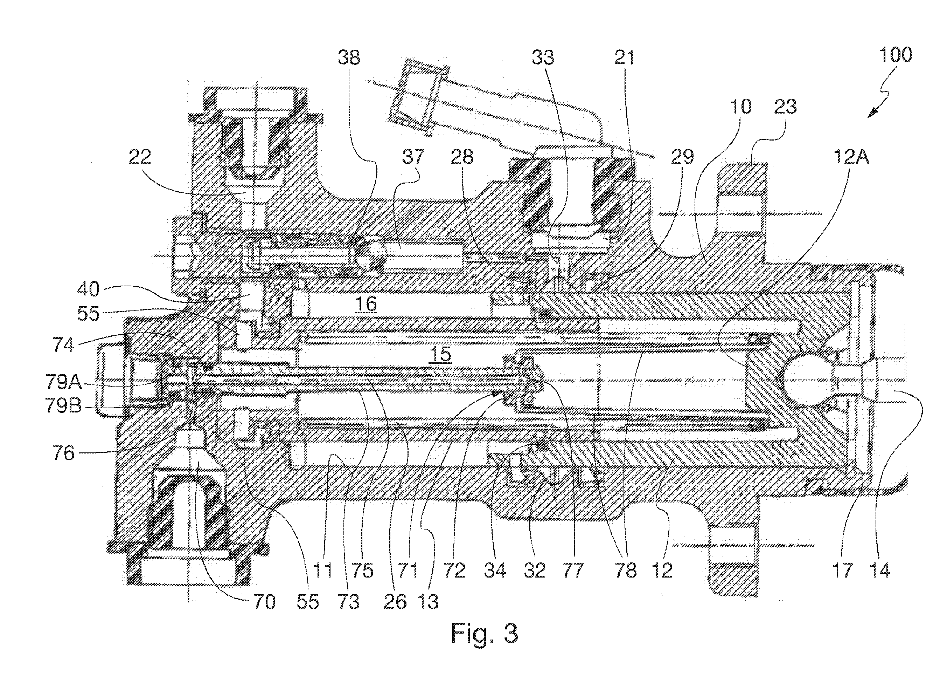

Fig. 3 discloses a master cylinder 100 based on the same principles as cylinder 1 shown in Fig. 1 and equipped with a balancing system of this kind. Elements already disclosed with reference to Fig. 1 are still denoted by the same reference numerals. Reference numeral 70 denotes the connection for the balancing duct (not shown), which connection is formed in the rear part of body 10 beyond the end of secondary piston 13, beyond end wall 18 and in a position substantially diametrically opposite outlet 22. Reference numeral 71 denotes the balancing valve for putting chamber 15 in communication with connection 70.

Valve 71 comprises a shutter 72, sliding jointly with primary piston 12 and formed by a ring slidable on a rod 73 coaxial with chamber 15. Rod 73 has a rear end portion received in a seat 74 also formed in the rear portion of body 10, whereas the remaining part extends into chamber 15 passing through the end of piston 13. Rod 73 has an axial bore 75 that, at its rear end, communicates with connection 70 through a first radial passage 76, and, at its front end, communicates with chamber 15 through a second radial passage 77. Ring 72 is mounted in such a position that it closes passage 77 in the rest conditions of piston 12, shown in the drawing. The connection between ring 72 and piston 12 is obtained for instance by a means of a frusto-conical flanged cartridge 78, the rear portion of which has fastened thereto ring 72, whereas the front portion abuts on projection 12A. At its rear end, rod 73 is further equipped with a pair of ring gaskets 79A, 79B, located before and behind passage 76, respectively, and ensuring fluid tightness between chamber 15 and seat 74.

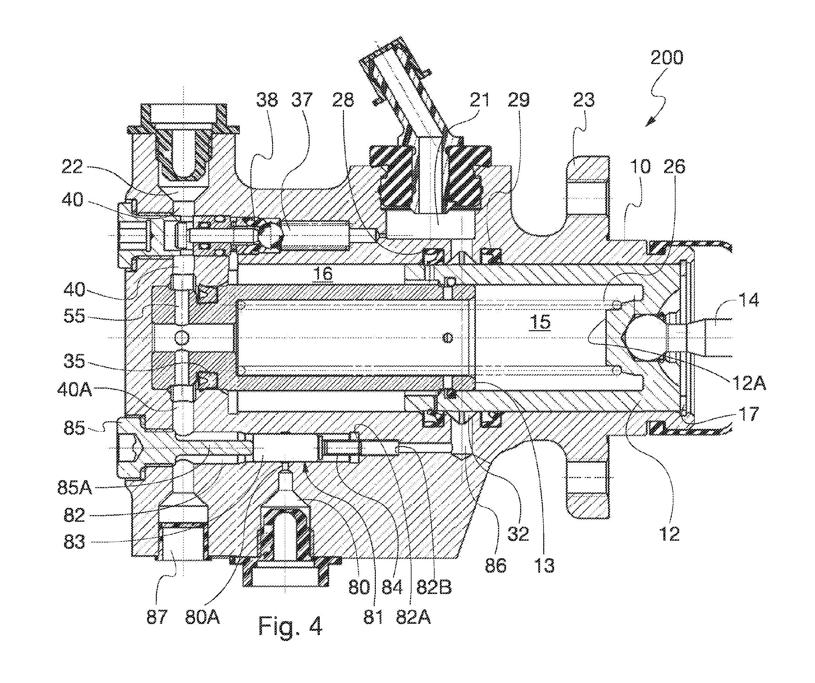

The balancing valve could open in response to the pressure existing in chamber 15 instead of opening in response to the stroke of the primary piston. Fig. 4 discloses a master cylinder 200 based on the same principles as cylinder 1 shown in Fig. 1 and equipped with a balancing system of this kind. Elements already disclosed with reference to Fig. 1 are still denoted by the same reference numerals. Reference numeral 80 denotes the connection for the balancing duct (not shown), which connection is formed in the lower part of body 10, and reference numeral 81 denotes the balancing valve for putting chamber 15 in communication with connection 80.

Valve 81 is mounted in a multiple-diameter axial chamber 82, formed in body 10 below bore 11, in a position substantially symmetrical with respect to seat 37 of valve 38, and having axis parallel to the axes of bore 11 and seat 37. This contributes to limiting the longitudinal size of the master cylinder. Chamber 82 communicates with chamber 15 through passages 55 and a radial passage 40A, symmetrical with respect to passage 40. Valve 81 has a shutter 83 which is axially slidable in chamber 82 in opposite direction with respect to primary piston 12 and can be operated for opening in a manner fluidically controlled by the pressure in chamber 15. Shutter 83 is therefore mechanically unconstrained to piston 12. This allows reducing the number of components. In rest conditions, the shutter is positioned so as to close access 80A to connection 80. The displacement of shutter 83 takes place against the action of a resilient return member 84, e.g. a spring, the preload of which advantageously determines a pressure threshold for the opening. Advantageously, such a threshold is as low as possible, so that the balancing function can be actuated already in the initial phases of the braking.

Chamber 82 is closed towards the outside of body 10 by a plug 85, an axial appendage 85A of which extends through the front portion of chamber 82 and acts a stop member for the stroke of shutter 83 in the rest position. On the opposite side with respect to plug 85, the stop for the stroke of shutter 83 is obtained thanks to a shoulder 82A created by a first narrowing of chamber 82. A further narrowing creates an abutment 82B for the end of spring 84 on the opposite side with respect to shutter 83. The end portion of chamber 82 communicates with trapezoidal groove 32, and hence with the supply reservoir, through a radial passage 86. The twofold communication capability for chamber 82 (with chamber 15 of the master cylinder and the supply reservoir) prevents oil possibly accumulated from remaining in a blind space in chamber 82, thereby hindering the proper displacement of shutter 83.

The seal between shutter 83 and connection 80 may be obtained by means of a suitable gasket but, in the preferred embodiment shown in the drawing, it is a direct seal (for instance of the metal-to-metal type). Such a feature further facilitates the slight leakage of fluid from balancing duct 80 occurring in any condition between chamber 82 and shutter 83. Should the fluid stagnating in the balancing duct undergo a considerable volume increase (for instance because of a temperature increase) when both balancing valves 81 are closed, such a leakage allows preventing a pressure increase.

If a sealing gasket is used, advantageously it can be displaced jointly with the shutter, in such a way that it remains operatively positioned in a region of chamber 82 located beyond opening 80A of connection 80, in particular between such opening and the first shoulder 82A. In this manner, the gasket cannot scrape against the edges of the opening, and hence it does not risk tearing.

The Figure further shows that passage 40A extends beyond chamber 82 and brings the fluid under pressure to an outlet 87 connectable to a further user device (e.g., the front brakes or the braking system of a possible trailer).

The presence of the pressure-driven or stroke-driven balancing does not modify the general operation of the invention. It is to be appreciated that balancing valves 71, 81 can be accessed from the outside like valve 38 and hence they too allow obtaining products with different calibrations from a same cylinder structure.

It is clear that the above description has been given only by way of non-limiting example and that changes and modifications are possible without departing from the scope of the invention as defined in the following claims.

For instance, as shown in Fig. 5, stem 50' in valve 38' may have constant diameter. In this case, a stop member 58 for the stroke of shutter 43 will be provided in chamber 37. Moreover, in valves 38 (Fig. 1) and 38', gasket 57 may be lacking and the seal, for instance of the metal-to-metal type, is obtained through a reduced clearance coupling.

Further, the primary piston could comprise a pair of telescopic members, which are both slidable relative to the secondary piston and are mechanically connected so that the external member makes the internal member slide after a certain stroke. In this manner, two low-pressure annular chambers are created, the one around the secondary piston and the other around the internal member of the primary piston, and each such chamber will be associated with a valve similar to valve 38.

## Claims

1. A differential master cylinder, including:
- an inlet (21) for a fluid to be pressurised and an outlet (22) for delivering pressurised fluid to a user device operating according to at least an initial operating phase and a final operating phase;
- compression members (12, 13) having at least a first and a second compressing surface, said first compressing surface having a greater area than the second compressing surface, said compression members being arranged to define at least one chamber (15) connected to the user device and to bring the fluid to a low pressure in the initial phase by means of the first surface and to a high pressure in the final phase by means of the second surface; and
- at least one control valve (38) arranged to cause a gradual transition between the two phases;
the compression members (12, 13) comprising a hollow primary piston (12) and a hollow secondary piston (13), which are open at least at one end and are mutually associated in telescopic manner so that the primary piston (12) slides on the secondary piston (13), which is stationary, and so that their cavities form an internal chamber forming the at least one chamber (15) connected to the user device, the sliding of the primary piston (12) determining the transition from the compression by means of the first surface to the compression by means of the second surface by actuating the control valve (38);
the differential master cylinder being **characterised in that**
- the at least one control valve (38) is located externally of the pistons (12, 13) and is housed in a seat (37) parallel to a bore (11) housing the pistons, said seat crossing the outlet from the internal chamber (15) and being arranged to allow the access to the valve from the outside.

2. The differential master cylinder as claimed in claim 1, **characterised in that** the primary piston (12) and the secondary piston (13) are further arranged to define at least one external annular chamber (16) arranged to cooperate with the internal chamber during the initial phase and subsequently isolated from the internal chamber.

3. The differential master cylinder as claimed in claim 1 or 2, **characterised in that**:
- a first and a second passage (53, 54) are formed in the primary piston (12) and the secondary piston (13), respectively, which passages, in rest conditions of the cylinder (1; 100; 200), put the inlet (21) in communication with the at least one external chamber (16) and the latter in communication with the internal chamber (15), respectively, whereas, upon the actuation of the primary piston (12), such passages are successively closed by respective gaskets (28, 34) that are static relative to their seats and dynamic relative to the external surfaces of the primary piston (12) and the secondary piston (13), respectively; and
- fluid tightness between the internal surface of said cylinder bore (11) housing the pistons and the external surface of the primary piston (12), while the latter is sliding, is provided by a third gasket (29) that is static relative to its seat and dynamic relative to the primary piston (12).

4. The differential master cylinder as claimed in claim 3, **characterised in that** a further passage is formed between the external surface of the secondary piston (13) and the internal surface of the bore (11), which passage connects the at least one external chamber (16) with an outlet (55, 40) from the internal chamber (15) and is associated with a unidirectional valve (35) keeping said passage open after the first and second passages have been closed and until a predetermined pressure, or "cutting point", is attained.

5. The differential master cylinder as claimed in any one of claims 1 to 4, **characterised in that** the internal chamber (15) is associated with a balancing valve (71), which is normally closed and is operated so as to open in order to establish a connection between the internal chambers (15) of a first and a second master cylinder (100) when a first and a second user device, driven by the first and the second master cylinder (100), respectively, operate in coordinate manner, and **in that** said balancing valve (71) has a shutter (72) that is slidable jointly with the primary piston (12) and is arranged to slide on a guide (73) coaxially arranged in the internal chamber (15) and having an axial bore that, at one side, is in communication with a balancing duct connecting the first and the second master cylinder and, at the opposite side, is put in communication with the internal chamber (15) when the displacement of the primary piston exceeds a given extent.

6. The differential master cylinder as claimed in any one of claims 1 to 4, **characterised in that** the internal chamber (15) is associated with a balancing valve (81), which is normally closed and is operated so as to open in order to establish a connection between the internal chambers (15) of a first and a second master cylinder (200) when a first and a second user device, driven by the first and the second master cylinder (200), respectively, operate in coordinate manner, and **in that** said balancing valve (81) is located in a seat (82) located externally of the pistons (12, 13) and having an axis parallel to the axes of the pistons and of the seat (37) of the control valve (38), and it has a shutter (83) mechanically unconstrained to the primary piston (12) and operated, for opening, in a manner fluidically controlled by the pressure taken by the fluid contained in the internal chamber (15), the shutter (83) being slidable parallel to and in opposite direction to the primary piston (12).

7. The differential master cylinder as claimed in any one of claims 1 to 6, **characterised in that** the user device is a brake or a group of brakes of a motor vehicle.

8. A braking system for motor vehicles, including:
- at least one differential master cylinder (1; 100; 200) as claimed in any preceding claim;
- a fluid reservoir connected to the inlet (21) in order to supply the cylinder with the fluid to be pressurised; and
- driving members of at least one brake or one brake group, connected to the outlet (22).

9. A method of driving a user device by means of pressurised fluid, the method including at least an initial phase in which fluid at low pressure and high volume is delivered to the device, a final phase in which fluid at high pressure and low volume is delivered to the device, and a phase of gradual transition between the initial and final phases, and being **characterised in that**:
- said initial and final phases include applying pressure to the fluid through the telescopic displacement of a primary piston (12) of a differential master cylinder (1; 100; 200) on a secondary piston (13), kept stationary, of the same differential master cylinder (1; 100; 200) in at least one chamber (15) formed internally to the pistons (12, 13); and
- said transitional phase includes controlling the transition through at least one control valve (38) located externally of the pistons (12, 13) and housed in a seat (37) that is parallel to a bore (11) housing the pistons and crosses the outlet from the at least one chamber (15).

10. The method as claimed in claim 9, **characterised in that** said initial, transitional and final phases include applying pressure at least to the fluid contained in an internal chamber (15) forming the at least one chamber (15) formed internally to the pistons (12, 13).

## Patentansprüche

1. Differential-Hauptzylinder mit:
- einem Einlass (21) für ein unter Druck zu setzendes Fluid und einem Auslass (22) zum Bereitstellen von unter Druck stehendem Fluid an eine Anwendervorrichtung, die gemäß wenigstens einer anfänglichen Betriebsphase und einer abschließenden Betriebsphase arbeitet;
- Kompressionselemente (12, 13), die wenigstens eine erste und eine zweite Kompressionsfläche haben, wobei die erste Kompressionsfläche eine größere Fläche als die zweite Kompressionsfläche hat und die Kompressionselemente angeordnet sind, um wenigstens eine Kammer (15) definieren, die an die Anwendervorrichtung angeschlossen ist, und um das Fluid in der Anfangsphase mittels der ersten Fläche auf einen niedrigen Druck zu bringen und in der Abschlussphase mittels der zweiten Fläche auf einen hohen Druck zu bringen; und
- wenigstens einem Steuerventil (38), das angeordnet ist, um einen gemächlichen Übergang zwischen den beiden Phasen zu bewirken;
wobei die beiden Kompressionselemente (12, 13) einen hohlen Primärkolben (12) und einen hohlen Sekundärkolben (13) aufweisen, die an wenigstens einem Ende offen sind und miteinander teleskopartig verbunden sind, sodass der Primärkolben (12) auf dem Sekundärkolben (13), der stationär ist, gleitet und deren Hohlräume eine interne Kammer bilden, welche die wenigstens eine Kammer (15) bildet, die an die Anwendervorrichtung angeschlossen ist, wobei das Gleiten des Primärkolbens (12) den Übergang von der Kompression mittels der ersten Fläche zur Kompression mittels der zweiten Fläche durch Betätigen des Steuerventils (38) vorgibt;
wobei der Differential-Hauptzylinder **dadurch gekennzeichnet ist, dass**
- das wenigstens eine Steuerventil (38) außerhalb von den Kolben (12,13) angeordnet ist und in einer Aufnahme (18) sitzt, die parallel zu einer Bohrung (11), in der die Kolben angeordnet sind, verläuft, wobei diese Aufnahme den Auslass von der internen Kammer (15) kreuzt und so angeordnet ist, dass das Ventil von außen zugänglich ist.

2. Differential-Hauptzylinder nach Anspruch 1, **dadurch gekennzeichnet, dass** der Primärkolben (12) und der Sekundärkolben (13) zudem so angeordnet sind, dass sie wenigstens eine äußere ringförmige Kammer (16) definieren, die so angeordnet ist, dass sie mit der internen Kammer während der Anfangsphase zusammenwirkt und anschließend von der internen Kammer isoliert ist.

3. Differential-Hauptzylinder nach Anspruch 1 oder 2, **dadurch gekennzeichnet, dass**
- ein erster und ein zweiter Durchgang (53,54) in dem Primärkolben (12) bzw. dem Sekundärkolben (13) ausgebildet sind, wobei diese Durchgänge im Ruhezustand des Zylinders (1; 100; 200) den Einlass (21) in Verbindung mit der wenigstens einen äußeren Kammer (16) bzw. letztere in Verbindung mit der internen Kammer (15) bringen, wobei bei Betätigung des Primärkolbens (12) derartige Durchgänge nacheinander mit zugeordneten Dichtungen (28, 34) geschlossen werden, die relativ zu ihren Aufnahmen statisch sind und relativ zu der äußeren Fläche des Primärkolbens (12) bzw. Sekundärkolbens (13) dynamisch sind; und
- durch eine dritte Dichtung (29), die in Bezug auf ihre Aufnahme statisch ist und relativ zu dem Primärkolben (12) dynamisch ist, Fluiddichtigkeit zwischen der Innenfläche der Zylinderbohrung (11), in der die Kolben angeordnet sind, und der Außenfläche des Primärkolbens (12) bewirkt wird, während letzterer gleitet.

4. Differential-Hauptzylinder nach Anspruch 3, **dadurch gekennzeichnet, dass** ein weiterer Durchgang zwischen der Außenfläche des Sekundärkolbens (13) und der Innenfläche der Bohrung (11) gebildet ist, wobei der Durchgang die wenigstens eine äußere Kammer (16) mit einem Auslass (55, 40) von der internen Kammer (15) verbindet und einem Einwegventil (35) zugeordnet ist, das den Durchgang offen hält, nachdem die ersten und die zweiten Durchgänge geschlossen wurden bis ein vorgegebener Druck oder "Trennpunkt" erreicht wird.

5. Differential-Hauptzylinder nach einem der Ansprüche 1 bis 4, **dadurch gekennzeichnet, dass** die innere Kammer (15) mit einem Ausgleichsventil (71) versehen ist, das normalerweise geschlossen ist und so betrieben wird, dass es sich öffnet, um eine Verbindung zwischen den inneren Kammern (15) des ersten und des zweiten Hauptzylinders (100) herzustellen, wenn eine erste und eine zweite Anwendervorrichtung, die von dem ersten bzw. dem zweiten Hauptzylinder (100) angetrieben werden, koordiniert arbeiten, und dass das Ausgleichsventil (71) einen Verschluss (72) hat, der zusammen mit dem Primärkolben (12) verschiebbar ist und so angeordnet ist, dass er auf einer Führung (73) gleitet, die koaxial in der inneren Kammer (15) angeordnet ist und eine axiale Bohrung hat, die auf einer Seite mit einer Ausgleichsleitung, die den ersten und den zweiten Hauptzylinder verbindet, in Verbindung steht und auf einer entgegengesetzten Seite mit der inneren Kammer (15) in Verbindung gebracht wird, wenn die Verschiebung des Primärkolbens ein gegebenes Maß übersteigt.

6. Differential-Hauptzylinder nach einem der Ansprüche 1 bis 4, **dadurch gekennzeichnet, dass** die innere Kammer (15) mit einem Ausgleichsventil (81) versehen ist, das normalerweise geschlossen ist und so betrieben wird, dass es sich öffnet, um eine Verbindung zwischen den inneren Kammern (15) des ersten und des zweiten Hauptzylinders (200) herzustellen, wenn eine erste und eine zweite Anwendervorrichtung, die von dem ersten bzw. dem zweiten Hauptzylinder (200) angetrieben wird, koordiniert arbeiten, und dass das Ausgleichsventil (81) in einer Aufnahme (82) angeordnet ist, die außerhalb der Kolben (12, 13) angeordnet ist und eine Achse hat, die parallel zur Achse der Kolben und des Aufnahme (37) des Steuerventils (38) verläuft, und es einen Verschluss (83) aufweist, der mechanisch zwanglos zu dem Primärkolben (12) ist und zum Öffnen auf Fluid gesteuerte Weise durch der Druck, der von der Fluid in der inneren Kammer (15) aufgenommen wird, betrieben wird, wobei der Verschluss (83) parallel zu und in entgegengesetzter Richtung des Primärkolbens (12 verschiebbar ist.

7. Differential-Hauptzylinder nach einem der Ansprüche 1 bis 6, **dadurch gekennzeichnet, dass** die Anwendervorrichtung eine Bremse oder eine Gruppe von Bremsen eines Motorfahrzeugs ist.

8. Bremssystem für Motorfahrzeuge, mit:
- wenigstens einem Differential-Hauptzylinder (1; 100; 200) nach einem der vorstehenden Ansprüche,
einem Fluidreservoir, das an den Einlass (21) angeschlossen ist, um den Zylinder mit dem unter Druck zu setzenden Fluid zu versorgen, und Antriebsgliedern der wenigstens einen Bremse oder Bremsengruppe, die an den Auslass (22) angeschlossen sind.

9. Verfahren zum Antreiben einer Anwendervorrichtung mittels unter Druck stehendem Fluid, wobei das Verfahren wenigstens eine Anfangsphase, in der Fluid mit niedrigem Druck und großem Volumen an die Vorrichtung abgegeben wird, eine Endphase, in der Fluid mit hohem Druck und kleinem Volumen an die Vorrichtung abgegeben wird, und einer Phase des allmählichen Übergangs zwischen der Anfangsphase und der Endphase aufweist und **dadurch gekennzeichnet ist, dass**
- die Anfangs- und Endphasen jeweils beinhalten, dass Druck auf das Fluid durch die teleskopische Verschiebung eines Primärkolbens (12) eines Differenzial-Hauptzylinders (1; 100; 200) auf einem stationär gehaltenen Sekundärkolben (13) desselben Differenzial-Hauptzylinders (1; 100; 200) in wenigstens einer Kammer (15), die innerhalb der Kolben (12, 13) gebildet ist, ausgeübt wird, und
- die Übergangsphase beinhaltet, dass der Übergang durch wenigstens ein Steuerventil (38) gesteuert wird, dass außerhalb der Kolben (12, 13) angeordnet ist und in einer Aufnahme (37) sitzt, die parallel zu einer Bohrung (11) ist, in welcher die Kolben aufgenommen sind und die den Auslass von der wenigstens einen Kammer (15) kreuzt.

10. Verfahren nach Anspruch 9, **dadurch gekennzeichnet, dass** die Anfangs-, Übergangs- und Endphasen jeweils beinhalten, dass zumindest auf das Fluid in der inneren Kammer (15) Druck ausgeübt wird, welche die wenigstens eine Kammer (15) bildet, die innerhalb der Kolben (12, 13) gebildet ist.

## Revendications

1. Maître-cylindre différentiel, comportant :
- un orifice d'entrée (21) destiné à un fluide à pressuriser et un orifice de sortie (22) pour délivrer le fluide pressurisé à un dispositif utilisateur fonctionnant selon au moins une phase de fonctionnement initiale et une phase de fonctionnement finale ;
- des éléments de compression (12, 13) présentant au moins une première et une seconde surface de compression, ladite première surface de compression présentant une aire plus grande que la seconde surface de compression, lesdits éléments de compression étant agencés pour définir au moins une chambre (15) raccordée au dispositif utilisateur et pour amener le fluide à une pression basse dans la phase initiale au moyen de la première surface et à une pression élevée dans la phase finale au moyen de la seconde surface ; et
- au moins une vanne de commande (38) agencée pour entraîner une transition progressive entre les deux phases ;
les éléments de compression (12, 13) comprenant un piston primaire creux (12) et un piston secondaire creux (13), lesquels sont ouverts au moins à une extrémité et associés mutuellement d'une façon télescopique de sorte que le piston primaire (12) coulisse sur le piston secondaire (13), lequel est stationnaire, et de sorte que leurs cavités forment une chambre interne constituant l'au moins une chambre (15) raccordée au dispositif utilisateur, le coulissement du piston primaire (12) déterminant la transition de la compression au moyen de la première surface à la compression au moyen de la seconde surface en actionnant la vanne de commande (38) ; le maître-cylindre différentiel étant **caractérisé en ce que**
- l'au moins une vanne de commande (38) est placée à l'extérieur des pistons (12, 13) et est logée dans un siège (37) parallèle à un alésage (11) logeant les pistons, ledit siège traversant l'orifice de sortie de la chambre interne (15) et étant agencé pour permettre l'accès à la vanne depuis l'extérieur.

2. Maître-cylindre différentiel selon la revendication 1, **caractérisé en ce que** le piston primaire (12) et le piston secondaire (13) sont, de plus, agencés pour définir au moins une chambre annulaire externe (16) agencée pour coopérer avec la chambre interne pendant la phase initiale puis isolée de la chambre interne.

3. Maître-cylindre différentiel selon la revendication 1 ou 2, **caractérisé en ce que** :
- dans le piston primaire (12) et le piston secondaire (13) sont respectivement formés un premier et un second passages (53, 54) qui, dans des situations de repos du cylindre (1 ; 100 ; 200) mettent l'orifice d'entrée (21) en communication avec l'au moins une chambre externe (16), et celle-ci en communication avec la chambre interne (15), respectivement, tandis que, lors de l'actionnement du piston primaire (12), ces passages sont fermés successivement par des joints d'étanchéité respectifs (28, 34) qui sont statiques par rapport à leurs sièges et dynamiques par rapport aux surfaces externes du piston primaire (12) et du piston secondaire (13), respectivement ; et
- l'étanchéité au fluide entre la surface interne dudit alésage cylindrique (11) logeant les pistons et la surface externe du piston primaire (12), tandis que ce dernier coulisse, est assurée par un troisième joint d'étanchéité (29) qui est statique par rapport à son siège et dynamique par rapport au piston primaire (12).

4. Maître-cylindre différentiel selon la revendication 3, **caractérisé en ce qu'**entre la surface externe du piston secondaire (13) et la surface interne de l'alésage (11) est formé un passage supplémentaire qui raccorde l'au moins une chambre externe (16) à un orifice de sortie (55, 40) de la chambre interne (15) et est associé à une vanne unidirectionnelle (35) maintenant ledit passage ouvert après que les premier et second passages ont été fermés et jusqu'à ce qu'une pression prédéterminée, ou « point de coupure » soit atteinte.

5. Maître-cylindre différentiel selon l'une quelconque des revendications 1 à 4, **caractérisé en ce que** la chambre interne (15) est associée à une vanne d'équilibrage (71) laquelle est normalement fermée et est actionnée de façon à s'ouvrir afin d'établir une liaison entre les chambres internes (15) d'un premier et d'un second maître-cylindre (100) lorsqu'un premier et un second dispositif utilisateur, commandés par le premier et le second maître-cylindre (100), respectivement, fonctionnent de façon coordonnée, et **en ce que** ladite vanne d'équilibrage (71) comporte un obturateur (72) qui peut coulisser conjointement avec le piston primaire (12) et est agencé pour coulisser sur un guide (73) disposé coaxialement dans la chambre interne (15) et comportant un alésage axial qui, d'un côté, communique avec un conduit d'équilibrage raccordant le premier et le second maître-cylindre et, du côté opposé, est mis en communication avec la chambre interne (15) lorsque le déplacement du piston primaire dépasse une longueur donnée.

6. Maître-cylindre différentiel selon l'une quelconque des revendications 1 à 4, **caractérisé en ce que** la chambre interne (15) est associée à une vanne d'équilibrage (81) laquelle est normalement fermée et est actionnée de façon à s'ouvrir afin d'établir une liaison entre les chambres internes (15) d'un premier et d'un second maître-cylindre (200) lorsqu'un premier et un second dispositif utilisateur, commandés par le premier et le second maître-cylindre (200), respectivement, fonctionnent de façon coordonnée, et **en ce que** ladite vanne d'équilibrage (81) est placée dans un siège (82) situé à l'extérieur des pistons (12, 13) et présentant un axe parallèle aux axes des pistons et du siège (37) de la vanne de commande (38), et **en ce qu'**il comporte un obturateur (83) mécaniquement non asservi au piston primaire (12) et actionné, pour l'ouverture, d'une manière commandée fluidiquement par la pression exercée par le fluide contenu dans la chambre interne (15), l'obturateur (83) pouvant coulisser parallèlement et en direction opposée au piston primaire (12).

7. Maître-cylindre différentiel selon l'une quelconque des revendications 1 à 6, **caractérisé en ce que** le dispositif utilisateur est un frein ou un groupe de freins d'un véhicule à moteur.

8. Système de freinage pour véhicules à moteur, comportant :
- au moins un maître-cylindre différentiel (1 ; 100 ; 200) selon l'une quelconque des revendications précédentes ;
- un réservoir de fluide raccordé à l'orifice d'entrée (21) afin de fournir au cylindre le fluide à pressuriser ; et
- des éléments de commande d'au moins un frein ou un groupe de freins raccordé(s) à l'orifice de sortie (22).

9. Procédé d'entraînement d'un dispositif utilisateur au moyen de fluide pressurisé, le procédé comportant au moins une phase initiale dans laquelle un fluide à basse pression et à volume élevé est délivré au dispositif, une phase finale dans laquelle un fluide à pression élevée et à faible volume est délivré au dispositif et une phase de transition progressive entre les phases initiale et finale, et qui est **caractérisé en ce que** :
- lesdites phases initiale et finale comprennent d'appliquer une pression au fluide par le déplacement télescopique d'un piston primaire (12) d'un maître-cylindre différentiel (1 ; 100 ; 200) sur un piston secondaire (13), maintenu stationnaire, du même maître-cylindre différentiel (1 ; 100 ; 200) dans au moins une chambre (15) formée à l'intérieur des pistons (12, 13) ; et
- ladite phase de transition comprend de commander la transition par l'intermédiaire d'au moins une vanne de commande (38) placée à l'extérieur des pistons (12, 13) et logée dans un siège (37) qui est parallèle à un alésage (11) logeant les pistons et qui traverse l'orifice de sortie de l'au moins une chambre (15).

10. Procédé selon la revendication 9, **caractérisé en ce que** lesdites phases initiale, de transition et finale comprennent d'appliquer une pression au moins au fluide contenu dans une chambre interne (15) constituant l'au moins une chambre (15) formée à l'intérieur des pistons (12, 13).
